# FASCICULE DE BREVET EUROPEEN

(11) **EP 2 663 797 B1**
(45) Date de publication et mention de la délivrance du brevet: **19.08.2015**
(21) Numéro de dépôt: 11802518.8
(22) Date de dépôt: 28.11.2011
(51) Int. Cl.: F16K 31/52

(54) **ROBINET POUR FLUIDE SOUS PRESSION ET RÉSERVOIR MUNI D'UN TEL ROBINET**
VENTIL FÜR DRUCKFLUID UND DRUCKSPEICHER MIT SOLCHEM VENTIL
VALVE FOR PRESSURIZED FLUID AND RESERVOIR WITH SUCH A VALVE

(30) Priorité: 11.01.2011 FR 1150227
(43) Date de publication de la demande: 20.11.2013
(60) Demande divisionnaire: 14199362.6
(73) Titulaire: L'Air Liquide Société Anonyme pour l'Etude et l'Exploitation des Procédés Georges Claude, 75007 Paris (FR)
(72) Inventeur: LIGONESCHE, Renaud, 95220 Herblay (FR); DEBRY, Tristan, 35000 Rennes (FR); DE POTTER, Romuald, 95150 Taverny (FR)
(74) Mandataire: De Cuenca, Emmanuel Jaime
(86) Numéro de dépôt international: PCT/FR2011/052786
(87) Numéro de publication internationale: WO 2012/095570

(56) Documents cités:
- EP-B1- 1 421 305
- FR-A1- 2 840 664
- US-A1- 2004 164 098

## Description

La présente invention concerne un robinet pour fluide sous pression ainsi qu'un réservoir muni d'un tel robinet.

L'invention concerne plus particulièrement un robinet pour fluide sous pression, avec ou sans détendeur de pression intégré, comprenant un corps abritant un circuit de fluide ayant une extrémité amont destinée à être mise en relation avec une réserve de fluide sous pression et une extrémité aval destinée à être mis en relation avec un appareil utilisateur, le circuit comprenant un clapet d'isolation pour obturer sélectivement le circuit, le clapet étant commandé par un levier monté pivotant sur le corps entre une position de repos dans laquelle le clapet d'isolation est maintenu dans une position de fermeture du circuit et une position active dans laquelle le levier déplace le clapet d'isolation dans une position d'ouverture du circuit.

L'invention concerne notamment les robinets de fluide sous pression, notamment de gaz sous pression, comprenant un organe de commande manuel du type à levier pivotant.

Des exemples non limitatif de tels robinets sont décrits dans les documents EP747796 ou EP1421305.

Le document EP1421305B1 décrit un robinet dans lequel le levier comprend au moins une ouverture et en ce que, lorsque le levier est dans l'une au moins des positions parmi : la position active, la position de repos ou une position intermédiaire entre ces deux positions, l'ouverture accueille en son sein une portion du corps du robinet et/ou une portion d'un organe fonctionnel monté sur le corps du robinet. Dans ce document, le levier comporte un orifice pour accueillir en permanence l'axe d'articulation du levier.

Le document US3035605 décrit un robinet conforme au préambule de la revendication 1 dans lequel, en position fermée, une extrémité du levier en forme de fourche vient se placer à cheval sur un raccord de remplissage/soutirage pour permettre à un écrou fixé ensuite sur le raccord de bloquer le levier en position fermée.

Les inventeurs s'efforcent d'améliorer sans cesse les solutions techniques pour les utilisateurs de robinets de fluide sous pression.

En particulier, il est souhaitable de disposer de robinets de fluide sous pression qui conservent ou augmentent le nombre de fonctions sans augmenter le volume ou leur encombrement (et de préférence en diminuant leur encombrement ou leur volume). En effet, idéalement, les robinets doivent pouvoir s'adapter à des tailles et forme de chapeaux de protection différents.

En outre, l'augmentation de la solidité ou et de la sécurité de tels dispositif est toujours souhaitable.

Un but de la présente invention est de d'améliorer au moins une partie certaines des caractéristiques des robinets de fluide sous pression.

A cette fin, le robinet selon l'invention, par ailleurs conforme à la définition générique qu'en donne le préambule ci-dessus, est défini par la revendication 1.

L'invention permet ainsi d'améliorer la compacité du robinet et, le cas échéant, assure une protection supplémentaire du robinet.

Selon d'autres particularités possibles :
- le robinet comporte un organe de mesure d'une grandeur physique du fluide dans le circuit, l'organe de mesure comprenant un afficheur, l'ouverture du levier ayant une forme conjuguée de l'afficheur de l'organe de mesure, lorsque le levier est dans sa position de repos, au moins une partie de l'afficheur de l'organe de mesure est logé dans l'ouverture du levier, c'est-à-dire que l'afficheur est entouré au moins partiellement par le corps du levier et s'intègre dans le volume du levier,
- le robinet comporte un organe de mesure d'une grandeur physique du fluide dans le circuit, l'organe de mesure comprenant un afficheur, l'ouverture du levier ayant une forme conjuguée de l'afficheur de l'organe de mesure, lorsque le levier est dans sa position active ou une position intermédiaire entre la position active et la position de repos, au moins une partie de l'afficheur de l'organe de mesure est logé dans l'ouverture du levier, c'est-à-dire que l'afficheur est entouré au moins partiellement par le corps du levier et s'intègre dans le volume du levier,
- l'organe de mesure est un manomètre indicateur d'une pression ou d'un contenu,
- le levier comporte un ou des renforts formant des traverses entre deux extrémités de l'ouverture,
- lorsque le levier est dans l'une au moins des positions active ou de repos, au moins une portion dite « d'appui » du levier coopère en butée avec le corps du robinet de façon à limiter le déplacement du levier,
- une extrémité du levier est articulée sur le corps et au moins une portion d'appui du levier est située à proximité de l'axe d'articulation du levier,
- au moins une portion d'appui du levier est située à proximité de l'extrémité du levier qui est opposée à l'axe d'articulation,
- l'ouverture est circulaire, ovale, carrée, rectangulaire ou parallélépipédique et est située à proximité d'une extrémité du levier,
- le levier est composé d'un matériau plastique et/ou d'un matériau métallique moulé,
- le levier est composé d'un matériau métallique embouti.

L'invention concerne également un réservoir de fluide sous pression comprenant un robinet conforme à l'une quelconque des caractéristiques ci-dessus ou ci-après.

D'autres particularités et avantages apparaîtront à la lecture de la description ci-après, faite en référence aux figures dans lesquelles :
- la figure 1 représente une vue en perspective, schématique et partielle, illustrant un exemple possible de robinet de gaz sous pression selon l'invention monté dans le col d'une bouteille de fluide sous pression,
- la figure 2 représente une vue de côté et schématique d'un détail de la figure 1, illustrant la structure et le fonctionnement d'un levier pivotant pour actionner un clapet,
- la figure 3 représente une vue en perspective d'un détail d'un autre mode de réalisation possible d'un levier de robinet selon l'invention.

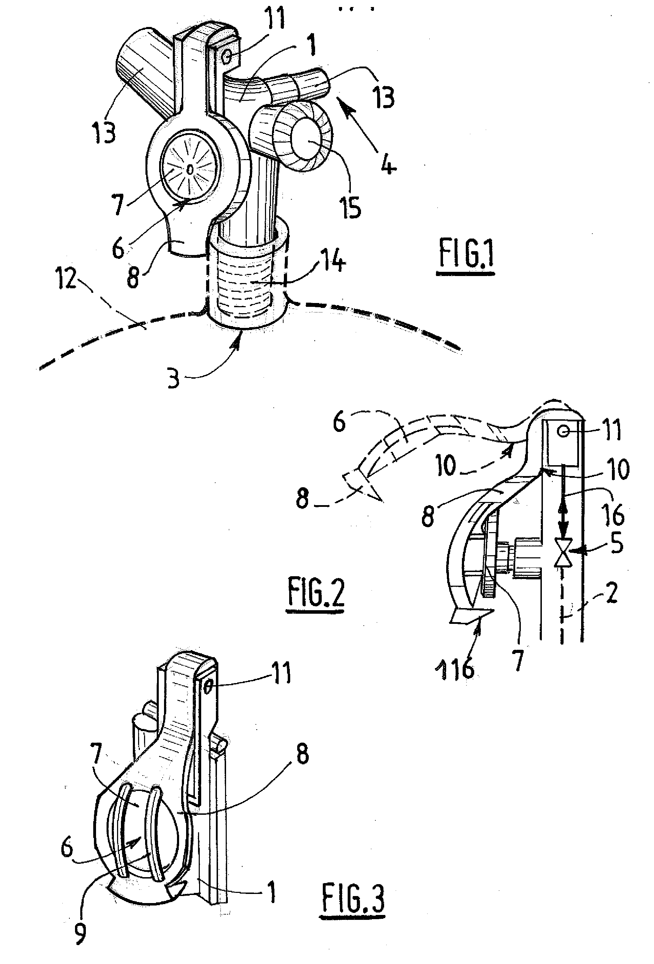

Le robinet illustré à titre d'exemple non limitatif à la figure 1 comprend un corps 1 comprenant une base 14 filetée montée dans l'orifice d'un réservoir 12 de gaz sous pression. Le corps 1 abrite un circuit 2 de soutirage de fluide ayant une extrémité 3 amont destinée à être mise en relation avec le volume de stockage d'un réservoir 12 de fluide sous pression et une extrémité 4 aval destinée à être mis en relation avec un appareil utilisateur.

L'extrémité 4 aval du circuit 2 peut déboucher dans un raccord de sortie 13 destiné à être relié à un tuyau et/ou un appareil utilisateur du gaz fourni par le robinet. Le robinet peut le cas échéant comporter un raccord 13 de remplissage distinct muni d'un clapet (non représenté) permettant d'injecter du gaz dans le réservoir 12 via un circuit interne au robinet (distinct ou en partie commun au circuit 2 de soutirage).

Classiquement, le circuit 2 de soutirage peut comporter des organes de contrôle tel qu'un détendeur de pression, un clapet de pression résiduelle, ...

Le circuit 2 de soutirage comporte en particulier un clapet 5 d'isolation (cf. schématiquement à la figure 2) permettant d'interrompre sélectivement le passage du gaz. Dans le cas où le robinet intègre un détendeur de pression, le clapet 5 peut être disposé en amont ou en aval du détendeur.

Le robinet comporte également un manomètre 7 mesurant la pression dans le circuit 2 de soutirage, par exemple en amont du clapet 5.

Le robinet peut comporter également une molette 15 pour commander manuellement le débit et/ou la pression délivrée par le robinet.

Le clapet 5 est commandé par un levier 8 monté pivotant sur le corps 1 du robinet entre une position de repos dans laquelle le clapet 5 d'isolation est maintenu dans une position de fermeture du circuit 2 (traits plein aux figures 1 et 2) et une position active dans laquelle le levier 8 déplace le clapet 5 d'isolation dans une position d'ouverture du circuit 2 (cf. traits pointillés à la figure 2).

Par exemple, la rotation du levier 8 actionne sélectivement un organe 16 pousse-clapet.

Par exemple, dans sa position de repos, le levier 8 est positionné contre ou le long du corps du robinet 1, de préférence dans une position stable.

Dans sa position active (de préférence stable), le levier 8 est par exemple décalé d'un angle non nul par rapport à la position de repos.

Dans cet exemple non limitatif, le levier 8 est articulé (axe 11) au niveau d'une de ses extrémités et, en position de repos, l'extrémité libre du levier 8 est orientée vers la base 14 du robinet. Bien entendu, cette configuration n'est nullement limitative. Par exemple, il est possible d'envisager une position de repos avec le levier 8 orienté à l'opposé de la base (vers le haut), ou selon toute direction (vers le côté) et tout angle déterminé approprié. De même pour la position active qui peut être définie selon toute autre orientation et angle relativement au corps 1.

Selon une particularité avantageuse, levier 8 comprend au moins une ouverture 6 et, lorsque le levier 8 est dans sa position de repos, l'ouverture 6 accueille en son sein au moins une partie du manomètre 7.

C'est-à-dire que le manomètre 7 (au moins une partie de son afficheur) vient s'inscrire dans le volume du levier 8.

Cette configuration permet d'augmenter la compacité de l'ensemble. De plus, le levier 8 assure ainsi une protection supplémentaire du manomètre 7 mais aussi de l'utilisateur du robinet. En position autour du manomètre 7, le levier 8 forme un cadre de protection supplémentaire pour le manomètre 7 le protégeant des chocs directs ou indirects, sans nécessiter de pièces supplémentaires. De plus, ce cadre formé par le levier 8 forme également un cerclage de maintien du manomètre en cas de défaillance de ce dernier (en cas par exemple de risque d'éjection du manomètre 7 soumis à la haute pression).

Ceci permet d'augmenter la fiabilité et de durée de vie de l'ensemble.

Bien entendu, l'invention n'est pas limitée à cet exemple de réalisation.

Ainsi, il est possible d'envisager une configuration alternative ou cumulative dans laquelle, lorsque le levier 8 est dans sa position active, l'ouverture 6 accueille en son sein une autre portion du corps 1 du robinet et/ou un organe fonctionnel monté sur le corps 1 du robinet.

De même, à titre alternatif ou cumulatif, il est possible d'envisager une configuration dans laquelle lors d'une position intermédiaire du levier 8 (lorsqu'il est déplacé entre ses positions de repos et active), l'ouverture 6 passe autour d'au moins une portion du corps 1 du robinet et/ou d'un organe fonctionnel monté sur le corps 1 du robinet.

Ceci permet d'augmenter la compacité de l'ensemble.

Dans l'exemple décrit, l'ouverture 6 est circulaire et conjuguée de la forme circulaire du manomètre 7. Bien entendu, la forme et/ou l'orientation de l'ouverture 6 peuvent être différentes et complémentaires de toute autre forme de tout autre organe du robinet (débitmètre, organe sélecteur à flotteur, capteur de température...).

De même, l'ouverture 6 peut être réalisée par une découpe et/ou un ou des pliages ou courbures du levier 8.

Ainsi l'ouverture 6 peut être délimitée par un contour fermé comme illustré aux figures. Bien entendu, en variante l'ouverture 6 peut être délimitée par un contour ouvert, c'est-à-dire par exemple par un cintrage de matière qui ne se referme pas sur lui-même (par exemple à la manière de la boucle d'un point d'interrogation).

Comme représenté à la figure 2, lorsque le levier 8 est dans sa position de repos, au moins une portion 10 dite « d'appui » du levier 8 coopère en butée avec le corps 1 du robinet de façon à limiter le déplacement du levier 8 vers le corps 1.

La portion 10 d'appui du levier 8 est par exemple située à proximité de l'axe 11 d'articulation du levier 6. Bien entendu, une portion d'appui similaire pourrait être prévue au niveau de l'extrémité libre du levier ou dans sa partie médiane. Ceci permet de renforcer encore la tenue de l'ensemble car l'appui peut le cas échéant limiter la déformation du levier 8 en cas de chocs plus importants.

Dans la variante de la figure 3, le levier 8 comporte un ou des renforts 9 formant des traverses entre deux extrémités de l'ouverture 6. Ces renforts 9 forment une protection supplémentaire (chocs, éjections) du manomètre 7 sans trop affecter la lecture continue du cadran de manomètre 7.

Comme représenté à la figure 2, l'extrémité libre 116 du levier 8 peut comporter une forme rétrécie limitant les risques d'accrochage possible du doigt d'un l'utilisateur pendant la manipulation.

De préférence, lorsque l'ouverture 6 du robinet accueille en son sein une portion du corps du robinet et/ou une portion d'un organe fonctionnel il n'y a pas d'accrochage mécanique entre l'ouverture 6 et la portion accueillie.

On conçoit donc aisément que, tout en étant de structure simple et peu coûteuse, la structure objet de l'invention permet d'améliorer la compacité et le cas échéant la robustesse du robinet.

L'invention peut concerner également tout dispositif ou procédé alternatif comprenant toute combinaison des caractéristiques ci-dessus.

## Revendications

1. Robinet pour fluide sous pression, avec ou sans détendeur de pression intégré, comprenant un corps (1) abritant un circuit (2) de fluide ayant une extrémité (3) amont destinée à être mise en relation avec une réserve de fluide sous pression et une extrémité (4) aval destinée à être mis en relation avec un appareil utilisateur, le circuit (2) comprenant un clapet (5) d'isolation pour obturer sélectivement le circuit (2), le clapet (5) étant commandé par un levier (8) monté pivotant sur le corps (1) entre une position de repos dans laquelle te clapet (5) d'isolation est maintenu dans une position de fermeture du circuit (2) et une position active dans laquelle le levier (8) déplace le clapet (5) d'isolation dans une position d'ouverture du circuit (2), le levier (8) comprenant au moins une ouverture (6) ,lorsque le levier (8) est dans l'une au moins des positions parmi : la position active, la position de repos ou une position intermédiaire entre ces deux positions, l'ouverture (6) accueille en son sein une portion d'un organe (7) fonctionnel monté sur le corps (1) du robinet **caractérisé en ce que** l'organe (7) fonctionnel et constitué d'un organe (7) de mesure d'une grandeur physique du fluide dans le circuit (2), l'organe (7) de mesure comprenant un afficheur.

2. Robinet selon la revendication 1, **caractérisé en ce que** l'ouverture (6) du levier (8) a une forme conjuguée de l'afficheur de l'organe de mesure (7) et **en ce que**, lorsque le levier (8) est dans sa position de repos, au moins une partie de l'afficheur de l'organe (7) de mesure est logé dans l'ouverture (6) du levier (8), c'est-à-dire que l'afficheur est entouré au moins partiellement par le corps du levier (8) et s'intègre dans le volume du levier (8).

3. Robinet selon la revendication 1, **caractérisé en ce que** l'ouverture (6) du levier (8) a une forme conjuguée de l'afficheur due l'organe de mesure (7) et **en ce que**, lorsque le levier (8) est dans sa position active ou une position intermédiaire entre la position active et la position de repos, au moins une partie de l'afficheur de l'organe (7) de mesure est logé dans l'ouverture (6) du levier (8), c'est-à-dire que l'afficheur est entouré au moins partiellement par le corps du levier (8) et s'intègre dans le volume du levier (8).

4. Robinet selon l'une quelconque des revendications 1 à 3, **caractérisé en ce que** l'organe (7) de mesure est un manomètre indicateur d'une pression ou d'un contenu.

5. Robinet selon la revendication 4 **caractérisé en ce que** lorsque le levier (8) et dans sa position de repos, au moins une partie de l'afficheur vient s'inscrire dans le volume du levier (8).

6. Robinet selon l'une quelconque des revendications 1 à 5, **caractérisé en ce que** le levier (8) comporte un ou des renforts (9) formant des traverses entre deux extrémités de l'ouverture (6).

7. Robinet selon l'une quelconque des revendications 1 à 6, **caractérisé en ce que**, lorsque le levier (8) est dans l'une au moins des positions active ou de repos, au moins une portion (10, 116) dite « d'appui » du levier (8) coopère en butée avec le corps (1) du robinet de façon à limiter le déplacement du levier (8).

8. Robinet selon la revendication 7, **caractérisé en ce qu'**une extrémité du levier (8) est articulée sur le corps (1) et **en ce qu'**au moins une portion (10) d'appui du levier (8) est située à proximité de l'axe (11) d'articulation du levier.

9. Robinet selon la revendication 7 ou 8, **caractérisé en ce qu'**au moins une portion (116) d'appui du levier (8) est située à proximité de l'extrémité du levier (8) qui est opposée à l'axe (11) d'articulation.

10. Robinet selon l'une quelconque des revendications 1 à 9, **caractérisé en ce que** l'ouverture (6) est circulaire, ovale, carrée, rectangulaire ou parallélépipédique et est située à proximité d'une extrémité du levier (8).

11. Robinet selon les revendications 4 et 10 prises en combinaison **caractérisé en ce que** l'ouverture (6) est circulaire et conjuguée de la forme circulaire du manomètre.

12. Robinet selon l'une quelconque des revendications 1 à 10, **caractérisé en ce que** le levier (8) est composé d'un matériau plastique et/ou de matériau métallique moulé, et/ou d'un matériau métallique embouti.

13. Robinet selon l'une quelconque des revendications 1 à 12, **caractérisé en ce que** l'ouverture (6) du levier (8) est délimitée par un contour fermé ou ouvert.

14. Robinet selon l'une quelconque des revendications 1 à 13, **caractérisé en ce que** dans sa position de repos le levier (8) est positionné contre ou le long du corps (1) du robinet, de préférence dans une position stable, dans sa position active le levier (8) étant décalé d'un angle non nul par rapport à la position de repos.

15. Robinet selon l'une quelconque des revendications 1 à 14, **caractérisé en ce que** le levier est articulé sur un axe (11) au niveau d'une de ses extrémités et, en position de repos, l'extrémité libre du levier (8) est orientée vers la base du robinet.

16. Robinet selon l'une quelconque des revendications 1 à 15, **caractérisé en ce que** l'extrémité libre du levier qui est opposée à l'axe d'articulation comporte une forme rétrécie.

17. Réservoir de fluide sous pression comprenant un robinet, **caractérisé en ce que** le robinet est conforme à l'une quelconque des revendications 1 à 16.

## Patentansprüche

1. Schließhahn für unter Druck stehendes Fluid, mit oder ohne integriertes Druckminderventil, umfassend einen Körper (1), der einen Fluidkreislauf (2) aufnimmt, der ein stromaufwärts befindliches Ende (3) hat, das dazu bestimmt ist, mit einem Speicher für unter Druck stehendes Fluid in Verbindung gebracht zu werden, und ein stromabwärts befindliches Ende (4), das dazu bestimmt ist, mit einem Gerät, welches das Fluid benutzt, in Verbindung gebracht zu werden, wobei der Kreislauf (2) ein Absperrventil (5) umfasst, um selektiv den Kreislauf (2) zu verschließen, wobei das Ventil (5) durch einen Hebel (8) betätigt wird, der an dem Körper (1) schwenkbar gelagert ist zwischen einer Ruhestellung, in welcher das Absperrventil (5) in einer Stellung zum Schließen des Kreislaufs (2) gehalten wird, und einer aktiven Stellung, in welcher der Hebel (8) das Absperrventil (5) in eine Stellung zum Öffnen des Kreislaufs (2) bewegt, wobei der Hebel (8) wenigstens eine Öffnung (6) umfasst, wobei die Öffnung (6) in ihrem Inneren einen Teil eines Funktionsorgans (7) aufnimmt, das an dem Körper (1) des Schließhahns montiert ist, wenn der Hebel (8) in wenigstens einer der Stellungen ist aus: der aktiven Stellung, der Ruhestellung oder einer Zwischenstellung zwischen diesen zwei Stellungen, **dadurch gekennzeichnet, dass** das Funktionsorgan (7) von einem Organ (7) zum Messen einer physikalischen Größe des Fluides in dem Kreislauf (2) gebildet ist, wobei das Messorgan (7) ein Anzeigeelement umfasst.

2. Schließhahn nach Anspruch 1, **dadurch gekennzeichnet, dass** die Öffnung (6) des Hebels (8) eine Form hat, die an das Anzeigeelement des Messorgans (7) angepasst ist, und dass, wenn der Hebel (8) in seiner Ruhestellung ist, wenigstens ein Teil des Anzeigeelements des Messorgans (7) in der Öffnung (6) des Hebels (8) angeordnet ist, das heißt, dass das Anzeigeelement wenigstens teilweise vom Körper des Hebels (8) umgeben ist und sich in den Raum des Hebels (8) integriert.

3. Schließhahn nach Anspruch 1, **dadurch gekennzeichnet, dass** die Öffnung (6) des Hebels (8) eine Form hat, die an das Anzeigeelement des Messorgans (7) angepasst ist, und dass, wenn der Hebel (8) in seiner aktiven Stellung oder in einer Zwischenstellung zwischen der aktiven Stellung und der Ruhestellung ist, wenigstens ein Teil des Anzeigeelements des Messorgans (7) in der Öffnung (6) des Hebels (8) angeordnet ist, das heißt, dass das Anzeigeelement wenigstens teilweise von dem Körper des Hebels (8) umgeben ist und sich in den Raum des Hebels (8) integriert.

4. Schließhahn nach einem der Ansprüche 1 bis 3, **dadurch gekennzeichnet, dass** das Messorgan (7) ein Manometer zum Anzeigen eines Drucks oder eines Inhalts ist.

5. Schließhahn nach Anspruch 4, **dadurch gekennzeichnet, dass**, wenn der Hebel (8) in seiner Ruhestellung ist, wenigstens ein Teil des Anzeigeelements in das Volumen des Hebels (8) eintritt.

6. Schließhahn nach einem der Ansprüche 1 bis 5, **dadurch gekennzeichnet, dass** der Hebel (8) eine Verstärkung oder Verstärkungen (9) aufweist, die Querstreben zwischen zwei Enden der Öffnung (6) bilden.

7. Schließhahn nach einem der Ansprüche 1 bis 6, **dadurch gekennzeichnet, dass**, wenn der Hebel (8) in wenigstens einer der aktiven Stellung oder der Ruhestellung ist, wenigstens ein Teil (10, 116), der so genannte "Stützteil", des Hebels (8) mit dem Körper (1) des Schließhahns im Anschlag so zusammenwirkt, dass er die Bewegung des Hebels (8) begrenzt.

8. Schließhahn nach Anspruch 7, **dadurch gekennzeichnet, dass** ein Ende des Hebels (8) am Körper (1) angelenkt ist und dass wenigstens ein Stützteil (10) des Hebels (8) nahe der Gelenkachse (11) des Hebels befindlich ist.

9. Schließhahn nach Anspruch 7 oder 8, **dadurch gekennzeichnet, dass** wenigstens ein Stützteil (116) des Hebels (8) nahe dem Ende des Hebels (8), das der Gelenkachse (11) entgegengesetzt ist, ausgebildet ist.

10. Schließhahn nach einem der Ansprüche 1 bis 9, **dadurch gekennzeichnet, dass** die Öffnung (6) kreisförmig, oval, quadratisch, rechteckig oder quaderförmig ist und nah eines Endes des Hebels (8) befindlich ist.

11. Schließhahn nach den Ansprüchen 4 und 10 in Kombination, **dadurch gekennzeichnet, dass** die Öffnung (6) kreisförmig ist und an die kreisförmige Form des Manometers angepasst ist.

12. Schließhahn nach einem der Ansprüche 1 bis 10, **dadurch gekennzeichnet, dass** der Hebel (8) aus einem Kunststoff und/oder aus metallischem Gusswerkstoff und/oder aus einem tiefgezogenem metallischen Werkstoff besteht.

13. Schließhahn nach einem der Ansprüche 1 bis 12, **dadurch gekennzeichnet, dass** die Öffnung (6) des Hebels (8) durch einen geschlossenen oder offenen äußeren Rand begrenzt wird.

14. Schließhahn nach einem der Ansprüche 1 bis 13, **dadurch gekennzeichnet, dass** der Hebel (8) in seiner Ruhestellung gegen den oder entlang des Körpers (1) des Schließhahns bevorzugt in einer stabilen Stellung angeordnet ist, wobei der Hebel (8) in seiner aktiven Stellung um einen Winkel ungleich Null gegenüber der Ruhestellung versetzt ist.

15. Schließhahn nach einem der Ansprüche 1 bis 14, **dadurch gekennzeichnet, dass** der Hebel an einer Achse (11) im Bereich eines seiner Enden angelenkt ist und das freie Ende des Hebels (8) in Ruhestellung zur Basis des Schließhahns hin ausgerichtet ist.

16. Schließhahn nach einem der Ansprüche 1 bis 15, **dadurch gekennzeichnet, dass** das freie Ende des Hebels, das der Gelenkachse entgegengesetzt ist, eine zurückspringende Form aufweist.

17. Behälter für unter Druck stehendes Fluid, der einen Schließhahn umfasst, **dadurch gekennzeichnet, dass** der Schließhahn einem der Ansprüche 1 bis 16 entspricht.

## Claims

1. Valve for pressurised fluid, with or without an incorporated pressure-reducing valve, comprising a body (1) housing a fluid circuit (2) having an upstream end (3) which is intended to be placed in communication with a supply of pressurised fluid and a downstream end (4) which is intended to be placed in communication with a device that uses said fluid, the circuit (2) comprising an isolation valve (5) for selectively closing off the circuit (2), the valve (5) being controlled by a lever (8), which is mounted so as to be able to pivot on the body (1) between a rest position in which the isolation valve (5) is held in a position for closing the circuit (2) and an active position in which the lever (8) moves the isolation valve (5) into a position for opening the circuit (2), the lever (8) comprising at least one opening (6), wherein the opening (6) accommodates therewithin a portion of a functional member (7) which is mounted on the body (1) of the valve when the lever (8) is in at least one of the positions comprising: the active position, the rest position, or an intermediate position between these two positions, **characterised in that** the functional member (7) is formed of a member (7) for measuring a physical parameter of the fluid in the circuit (2), the measuring member (7) comprising a display.

2. Valve according to claim 1, **characterised in that** the opening (6) of the lever (8) has a shape that matches the display of the measuring member (7) and **in that**, when the lever (8) is in the rest position thereof, at least part of the display of the measuring member (7) is accommodated in the opening (6) of the lever (8), that is to say that the display is surrounded at least in part by the body of the lever (8) and is incorporated in the volume of the lever (8).

3. Valve according to claim 1, **characterised in that** the opening (6) of the lever (8) has a shape that matches the display of the measuring member (7) and **in that**, when the lever (8) is in the active position thereof or an intermediate position between the active position and the rest position, at least part of the display of the measuring member (7) is accommodated in the opening (6) of the lever (8), that is to say that the display is surrounded at least in part by the body of the lever (8) and is incorporated in the volume of the lever (8).

4. Valve according to any of claims 1 to 3, **characterised in that** the measuring member (7) is a manometer indicating a pressure or a content.

5. Valve according to claim 4, **characterised in that** when the lever (8) is in the rest position thereof, at least part of the display enters the volume of the lever (8).

6. Valve according to any of claims 1 to 5, **characterised in that** the lever (8) comprises one or more reinforcements (9) forming cross members between two ends of the opening (6).

7. Valve according to any of claims 1 to 6, **characterised in that**, when the lever (8) is in at least one of the active or rest positions, at least one portion (10, 116), referred to as the bearing portion, of the lever (8), interacts in abutment with the body (1) of the valve in such a way as to limit the movement of the lever (8).

8. Valve according to claim 7, **characterised in that** one end of the lever (8) is articulated on the body (1) and **in that** at least one bearing portion (10) of the lever (8) is located close to the axis (11) of articulation of the lever.

9. Valve according to either claim 7 or claim 8, **characterised in that** at least one bearing portion (116) of the lever (8) is located close to the end of the lever (8) that is opposite the axis (11) of articulation.

10. Valve according to any of claims 1 to 9, **characterised in that** the opening (6) is circular, oval, square, rectangular or parallelepipedal and is located close to one end of the lever (8).

11. Valve according to claims 4 and 10 taken in combination, **characterised in that** the opening (6) is circular and matches the circular shape of the manometer.

12. Valve according to any of claims 1 to 10, **characterised in that** the lever (8) is made of a plastics material and/or of moulded metal material, and/or of a pressed metal material.

13. Valve according to any of claims 1 to 12, **characterised in that** the opening (6) of the lever (8) is delimited by a closed or open contour.

14. Valve according to any of claims 1 to 13, **characterised in that**, in the rest position thereof, the lever (8) is positioned against or along the body (1) of the valve, preferably in a stable position, in the active position thereof, the lever (8) being shifted by a non-zero angle relative to the rest position.

15. Valve according to any of claims 1 to 14, **characterised in that** the lever is articulated on an axis (11) in the region of one of the ends thereof and, in the rest position, the free end of the lever (8) is oriented towards the base of the valve.

16. Valve according to any of claims 1 to 15, **characterised in that** the free end of the lever that is opposite the axis of articulation has a narrowed shape.

17. Tank of pressurised fluid comprising a valve, **characterised in that** the valve is according to any of claims 1 to 16.
